# EUROPEAN PATENT SPECIFICATION

(11) **EP 2 388 122 B1**
(45) Date of publication and mention of the grant of the patent: **13.03.2019**
(21) Application number: 11004132.4
(22) Date of filing: 18.05.2011
(51) Int. Cl.: B29C 45/06, B29C 45/80, B29C 45/26

(54) **ROTARY TYPE INJECTION MOLDING MACHINE AND AN INJECTION MOLDING METHOD**
ROTATIONSSPRITZGIESSAGGREGAT UND SPRITZGIESSVERFAHREN
MACHINE DE MOULAGE D'INJECTION DE TYPE ROTATIF ET PROCÉDÉ DE MOULAGE D'INJECTION

(30) Priority: 18.05.2010 JP 2010114589
(43) Date of publication of application: 23.11.2011
(73) Proprietor: SUMITOMO HEAVY INDUSTRIES, LTD., Tokyo 141-6025 (JP)
(72) Inventor: Suzuki, Motofumi, Chiba-shi Chiba 263-0001 (JP)
(74) Representative: Wagner, Karl H.

(56) References cited:
- JP-A- 2000 202 853

## Description

### BACKGROUND OF THE INVENTION

### 1. Field of the Invention

The present invention generally relates to rotary type injection molding machines and injection molding methods. More specifically, the present invention relates to a rotary type injection molding machine including a rotary table where a plurality of molds is provided around a rotating shaft and an injection molding method.

### 2. Description of the Related Art

Conventionally, a rotary type injection molding machine, where mold closing is performed in a state where a rotary table is positioned by a positioning pin, has been known, see JP 10-264200 A.

In the meantime, in such a rotary type injection molding machine, even if a certain degree of a position gap is provided between molds, mold closing can be performed by a positioning part formed by a guide pin and an engaging hole.

However, in the above-discussed rotary type injection molding machine where the mold closing is performed in a state where the rotary table is positioned, rotation of the rotary table is restricted. Therefore, galling may be generated between the guide pin and the engaging hole at the time of mold closing so that the service lifetime of the mold may be shortened.

JP 2000-202853 A discloses a method and apparatus for setting a stop standard position of a table driving mechanism for an injection molding machine. In order to exactly set at a stop standard position by moving a table in forward or reverse direction in the state that engagement of a platen side mold with a table side mold is disengaged, monitoring a driving current or the like of a motor, and using a position where an absolute value of the current or the like becomes small as the standard position of the table is proposed. An injection molding machine rotates a rotary table at a pitch of 180°, and molds and takes out a product. Thus, a plurality of table side molds are mounted at a pitch of 180° on the table, and one mold is engaged with the other mold in association with a mold clamping operation due to a rise of the table or a fall of a platen. In this case, a driving current or a load of a servo motor for driving the table is monitored, and a position where absolute values of these values become small is used as a stop standard position of the table. Thus, a positional deviation between a guide post and a guide bush is eliminated.

### SUMMARY OF THE INVENTION

Accordingly, embodiments of the present invention may provide a novel and useful rotary type injection molding machine and an injection molding method solving one or more of the problems discussed above.

More specifically, the embodiments of the present invention may provide an injection molding machine and an injection molding method whereby galling at the time of mold closing can be properly prevented so that a service lifetime of a mold can be extended.

Another aspect of the embodiments of the present invention may be to provide a rotary type injection molding machine, including a first mold provided rotatable by a rotating shaft of a rotary table; a second mold configured to perform mold closing with the first mold; a table positioning part configured to rotate the rotary table at a designated rotation angle so as to be positioned; a mold positioning part configured to position the first mold and the second mold in a case of the mold closing of the first mold and the second mold; and a rotation angle detecting part configured to detect a rotation angle of the rotary table, wherein the table positioning part is configured to break positioning of the rotary table before the mold positioning part works; and the rotation angle detecting part detects the rotation angle of the rotary table after positioning by the mold positioning part is completed.

Preferably, in the above aspect, the rotary type injection molding machine further comprises a rotation angle comparing part configured to compare the rotation angle of the rotary table detected by the rotation angle detecting part and the designated rotation angle.

Preferably, in the above aspect, the rotary type injection molding machine further comprises a rotation angle correcting part configured to correct the designated rotation angle based on the rotation angle of the rotary table detected by the rotation angle detecting part.

Another aspect of the embodiments of the present invention may be to provide an injection molding method, including the steps of rotating a rotary table, where a first mold is provided rotatable by a rotating shaft, at a designated angle so as to position the rotary table; breaking positioning of the rotary table so that the first mold and a second mold are positioned; and detecting a rotation angle of the rotary table after positioning of the first mold and the second mold is completed.

According to the embodiment of the present invention, it is possible to provide an injection molding machine and an injection molding method whereby galling at the time of mold closing can be properly prevented so that a service lifetime of a mold can be extended.

Additional objects and advantages of the embodiments are set forth in part in the description which follows, and in part will become obvious from the description, or may be learned by practice of the invention. The object and advantages of the invention will be realized and attained by means of the elements and combinations particularly pointed out in the appended claims. It is to be understood that both the foregoing general description and the following detailed description are exemplary and explanatory and are not restrictive of the invention as claimed.

### BRIEF DESCRIPTION OF THE DRAWINGS

FIG. 1 is a schematic view showing a main mechanical structure of a rotary type injection molding machine 1 of an embodiment of the present invention;
FIG. 2 is a schematic view of a movable platen 20 seen in a Y-direction in FIG. 1 along a mold opening and closing direction;
FIG. 3 is a schematic view showing a state where a rotary table 22 is turned over from a state shown in FIG. 2;
FIG. 4 is a view showing a main structure of a driving system and a control system of the rotary type injection molding machine 1 of the embodiment of the present invention; and
FIG. 5 is a flowchart showing an example of a main process realized by a main controller 40 of the embodiment of the present invention.

### DETAILED DESCRIPTION OF THE PREFERED EMBODIMENTS

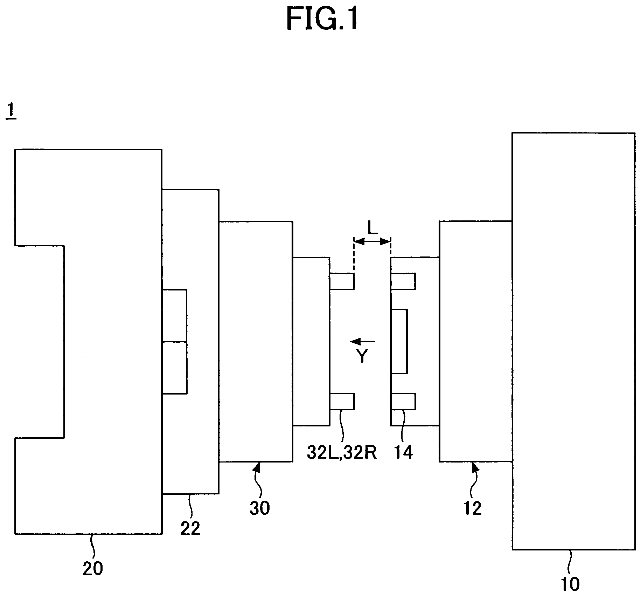

A description is given below, with reference to the FIG. 1 through FIG. 5 of embodiments of the present invention.

FIG. 1 is a schematic view showing a main mechanical structure of a rotary type injection molding machine 1 of an embodiment of the present invention. The rotary type injection molding machine 1 includes a stationary platen 10 and a movable platen 20. A stationary mold 12 is fixed to the stationary platen 10. A movable mold 30 is provided at the movable platen 20 via a rotary table 22. The rotary table 22 is rotatably provided at the movable platen 20. The movable mold 30 is fixed to the rotary table 22. With this structure, the movable mold 30 is provided rotatably relative to the movable platen 20.

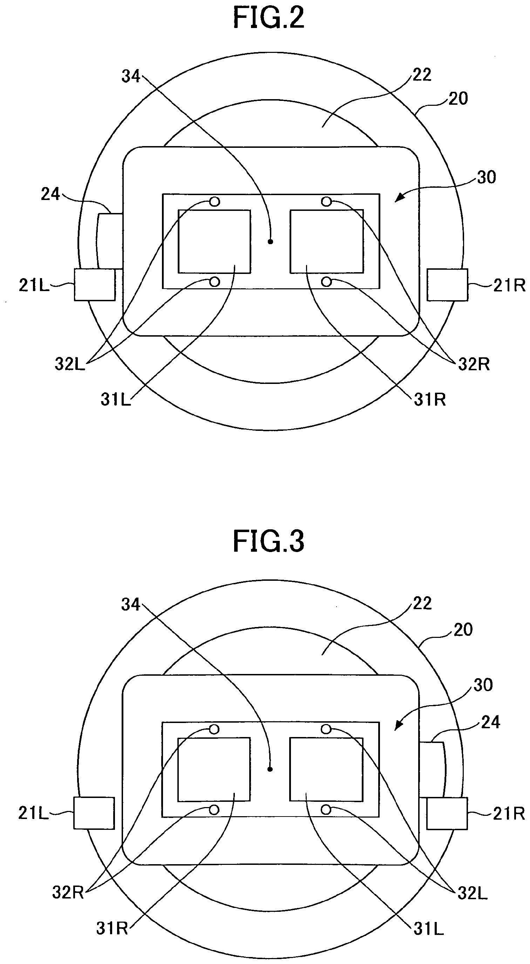

FIG. 2 is a schematic view of the movable platen 20 seen in a Y-direction in FIG. 1 along a mold opening and closing direction. The movable mold 30 has a structure where a plurality of molds (two molds 31L and 31R in this embodiment) is provided in a substantially concentric manner with respect to a rotating shaft 34 of the rotary table 22. The molds 31L and 31R are touched to the stationary mold 12 so that a designated molded article is formed by the molds 31L and 31R together with the stationary mold 12. For example, the mold 31L is touched to the stationary mold 12 so that a portion of the designated molded article is molded by the mold 31L and the stationary mold 12. The mold 31R is touched to the stationary mold 12 so that remaining portion of the designated molded article is molded by the mold 31R and the stationary mold 12. The stationary mold 12 may have a structure where a plurality of molds, as well as the molds 31L and 31R of the movable mold 30, is provided. Alternatively, the stationary mold 12 has, for example, a single mold.

Guide pins 32L are provided at the mold 31L. The guide pins 32L are configured to be engaged with corresponding engaging holes 14 formed in the stationary mold 12 when the mold 31L is touched to the stationary mold 12. Similarly, guide pins 32R are provided at the mold 31R. The guide pins 32R are configured to be engaged with the corresponding engaging holes 14 formed in the stationary mold 12 when the mold 31R is touched to the stationary mold 12. The guide pins 32L and 32R and the engaging holes 14 work together as a mold positioning part so that the molds 31L and 31R are positioned relative to the stationary mold 12 when the mold 31L or the mold 31R is touched to the stationary mold 12. The guide pins 32L and 32R and the engaging holes 14 may be provided in a reverse manner. That is, guide pins may be provided at the movable mold 12 side and engaging pins may be provided at the molds 31L and 31R side.

The rotary table 22 includes a projecting part 24 in a designated position of an external circumferential part of the rotary table 22. Two stoppers 21L and 21R are provided at the movable platen 20. The stoppers 21L and 21R are configured to be engaged with the projecting part 24 of the rotary table 22 in a rotating direction of the rotary table 22. The rotary table 22 is provided rotatably between the two stoppers 21L and 21R of the movable platen 20. In other words, the stoppers 21L and 21R form an area where the rotary table 22 can be rotated. The area where the rotary table 22 can be rotated is, in this example, approximately 180 degrees. FIG. 2 shows an example of a pushing state where the projecting part 24 of the rotary table 22 comes in contact with the stopper 21L of the movable platen 20. Further counterclockwise rotation of the rotary table 22 from this pushing state is restricted.

FIG. 3 is a schematic view showing a pushing state where the rotary table 22 is turned over (rotated clockwise at approximately 180 degrees) from the pushing state shown in FIG. 2. In the pushing state shown in FIG. 3, the projecting part 24 of the rotary table 22 comes in contact with the stopper 21R of the movable platen 20. Further counterclockwise rotation of the rotary table 22 from this state is restricted.

The pushing states shown in FIG. 2 and FIG. 3 where the projecting part 24 comes in contact with the stopper 21L or 21R of the rotary table 22 correspond to a state where a mold closing process can be started. In other words, in the pushing states shown in FIG. 2 and FIG. 3, a position of the rotary table 22 is made and maintained so that the movable mold 30 and the stationary mold 12 are touched to each other.

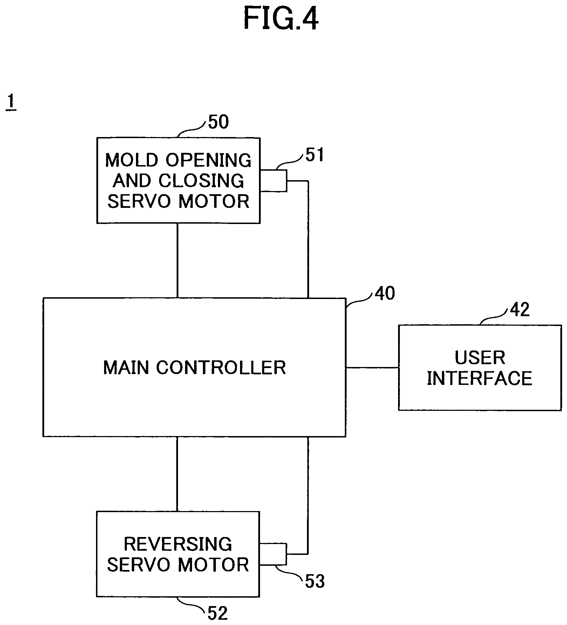

FIG. 4 is a view showing a main structure of a driving system and a control system of the rotary type injection molding machine 1 of the embodiment of the present invention.

The rotary type injection molding machine 1 includes a main controller 40. The main controller 40 is mainly formed by a microcomputer. The main controller 40 may include, for example, a CPU, a ROM where a control program or the like is stored, a RAM where computing results or the like are stored, a timer, a counter, an input interface, and an output interface, and others.

Various kinds of driving devices, including a mold opening and closing servo motor 50 and a reversing servo motor 52, are connected to the main controller 40. The mold opening and closing servo motor 50 is configured to generate power for mold opening and closing operations. In other words, the mold opening and closing servo motor 50 is configured to operate a toggle mechanism (not shown in FIG. 4). That is, by the mold opening and closing servo motor 50, the movable platen 20 is moved in a direction approaching the stationary platen 10 at the time of mold closing, and the movable platen 20 is moved in a direction separating from the stationary platen 10 at the time of mold opening. The reversing servo motor 52 is configured to generate power for rotating operations (turning-over operation) with respect to the rotating shaft 34 of the rotary table 22. The reversing servo motor 52 is configured to operate, for example, a proper gear mechanism (not shown in FIG. 4) so that the rotary table 22 is rotated.

An encoder 51 is provided at the mold opening and closing servo motor 50 so as to detect a number of revolutions of the mold opening and closing servo motor 50. An encoder 53 is provided at the reversing servo motor 52 so as to detect a number of revolutions of the reversing servo motor 52. The numbers of the revolutions of the mold opening and closing servo motor 50 and the reversing servo motor 52 detected by the encoders 51 and 53 are input to the main controller 40.

A user interface 42 is connected to the main controller 40. The user interface 42 may include a display and an input device. The main controller 40 is configured to realize various kinds of molding processes corresponding to various kinds of values being set, in advance, by the user via the user interface 42.

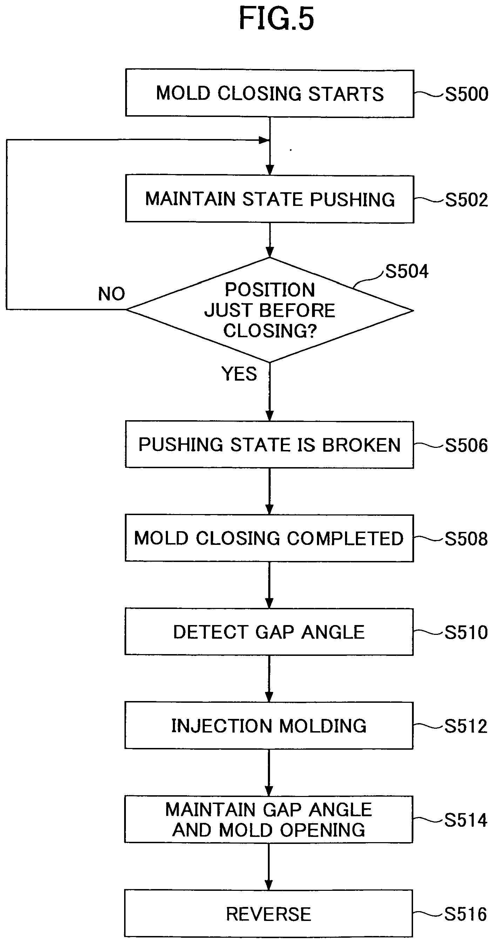

FIG. 5 is a flowchart showing an example of a main process realized by the main controller 40 of the embodiment of the present invention.

In step S500, a mold closing process is started. More specifically, the main controller 40 controls the mold opening and closing servo motor 50 so as to make the movable platen 20 start being moved in a direction approaching the stationary platen 10. A case where the mold closing process starts from the pushing state shown in FIG. 2, as an example, is discussed. In other words, a case where the mold closing process starts in the pushing state where the rotary table 22 is maintained at a first designated rotation angle is discussed.

In step S502, the main controller 40 controls the reversing servo motor 52 so that the pushing state where the projecting part 24 of the rotary table 22 is pushed by the stopper 21L is maintained. In other words, in order to prevent a positioning state of the rotary table 22 from being broken due to disturbance based on the movement of the movable platen 20, while the main controller 40 maintains the pushing state where the projecting part 24 of the rotary table 22 is pushed by the stopper 21L, the main controller 40 starts the mold closing process. Maintaining a pushing force on the stopper 21L by the projecting part 24 of the rotary table 22 can be realized by maintaining a designated rotating torque (a designated rotating torque in a counterclockwise direction in the example shown in FIG. 2) by the mold opening and closing servo motor 50.

In step S504, the main controller 40 monitors an output value of the encoder 51 regarding the mold opening and closing servo motor 50 and determines, based on the output value of the encoder 51, whether the movable mold 30 reaches a position just before closing where the movable mold 30 is touched to the stationary mold 12. More specifically, the main controller 40 determines, based on the output value of the encoder 51, whether the guide pins 32L or 32R reach a position just before closing, the position being where the guide pins 32L or 32R reach the engaging holes 14 of the stationary mold 12. The position just before closing where the guide pins 32L or 32R reach the engaging holes 14 of the stationary mold 12 is a position where a length L (see FIG. 1) between the guide pins 32L or 32R and the engaging holes 14 becomes substantially or equal to zero. The position just before closing where the movable mold 30 is touched to the stationary mold 12 is properly determined by considering responsibility of control or the like. Thus, after the mold closing process is started, in the mold closing process, while the main controller 40 monitors the output value of the encoder 51 regarding the mold opening and closing servo motor 50, the main controller 40 detects the position just before closing where the movable mold 30 is touched to the stationary mold 12.

In step S504, in a case where the movable mold 30 does not reach to the position just before closing where the movable mold 30 is touched to the stationary mold 12, the process goes back to step S502. In a case where the movable mold 30 reaches to the position just before closing where the movable mold 30 is touched to the stationary mold 12, the process goes to step S506.

In step S506, the main controller 40 breaks the pushing state where the projecting part 24 of the rotary table 22 is pushed onto the stopper 21L. In other words, the main controller 40 stops the operation of the reversing servo motor 52 so that the rotary table 22 becomes free. As a result of this, restriction of the rotary table 22 in a rotating direction relative to the movable platen 20 (restriction of rotation in a clockwise direction in FIG. 2) is broken so that the positioning state of the rotary table 22 is broken.

In step S508, the main controller 40 completes the mold closing process. The mold closing process in step S500 through S508 is performed without influence of the processes in steps S504 and S506. The processes in steps S504 and S506 may be introduced by being added to the existing mold closing process. For example, it is not necessary to temporarily decrease or change the mold closing speed for the processes in steps S504 and S506.

Thus, in this embodiment, even if there is a slight gap (gap angle) between the movable mold 30 and the stationary mold 12 in the pushing state where the projecting part 24 of the rotary table 22 is pushed onto the stopper 21L, the rotary table 22 is free at the position just before closing where the guide pins 32L or 32R reach the engaging holes 14 of the stationary mold 12. Therefore, the guide pins 32L or 32R smoothly enter into the engaging holes 14 of the stationary mold 12, so that generation of galling is effectively prevented.

In step S510, based on the output value of the encoder 53 at the time when the mold closing process is completed, the main controller 40 detects and monitors the rotation angle of the rotary table 22 when the mold closing process is completed, namely the rotation angle of the rotary table 22 after the movable mold 30 is touched to the stationary mold 12.

At this time, the main controller 40 detects and monitors, for example, a change angle (gap angle) relative to the rotation angle (the first designated rotation angle) in the pushing state where the projecting part 24 of the rotary table 22 is pushed onto the stopper 21L. This gap angle corresponds to a gap angle to be compensated for by insertion of the guide pins 32L or 32R into the engaging holes 14 of the stationary mold 12 or a gap angle between the movable mold 30 and the stationary mold 12 in the pushing state where the projecting part 24 of the rotary table 22 is pushed onto the stopper 21L.

The detected rotation angle (gap angle) of the rotary table 22 at the time when the mold closing process is completed may be stored in a storage device (for example, RAM or EEPROM). The stored value may be displayed at a display of the user interface 42 for, for example, every mold closing process. Alternatively, each of stored values obtained by the mold closing processes may be displayed at the display of the user interface 42 at the time when a request is made by the user. At this time, an average value, a maximum value, or the like of the stored values may be displayed. A gap angle relative to an initial value (a stored value at the time of first mold closing after the setup) may be calculated and displayed.

In this example, since the rotation angle of the rotary table 22 at the time when the mold closing process is completed is stored and output, the user can check, via the output value, whether the positioning state by the stoppers 21L and 21R and the projecting part 24 of the rotary table 22 is precisely realized, namely whether there is a problem in the positioning of the movable mold 30 or the rotary table 22. For example, where there is a large gap in the arrangement of the movable mold 30 or the rotary table 22, the mold positioning part, the guide pins 32L and 32R and the engaging holes 14 greatly work with an amount corresponding to the large gap and a gap angle whose amount corresponding to the large gap is detected. Therefore, the user checks whether the gap angle is in an acceptable range. If necessary, correcting the arrangement of the movable mold 30 or the rotary table 22 can be performed. Thus, galling (galling between the guide pins 32L or 32R and the engaging holes 14) generated due to the gap angle at the time of the mold closing can be detected at an early stage and prevented. As a result of this, it is possible to extend the service lifetime of the guide pins 32L and 32R (movable mold 30).

Monitoring of the rotation angle (gap angle) of the rotary table 22 at the time when the mold closing process is completed may be realized by the main controller 40. For example, an acceptable maximum value of the gap angle of the rotary table 22 is set in advance by the user via the user interface 42. Alternatively, the acceptable maximum value of the gap angle of the rotary table 22 is set in advance as a default value by a product maker. The main controller 40 may evaluate (monitor), by using this acceptable maximum value as a standard, the rotation angle (gap angle) of the rotary table 22 at the time when the mold closing process is completed. For example, in a case where the gap angle of the rotary table 22 at the time when the mold closing process is completed exceeds the acceptable maximum value, information indicating that the gap angle of the rotary table 22 at the time when the mold closing process is completed exceeds the acceptable maximum value may be output via the user interface 42. The output may be acoustically and/or visually performed. For example, a warning indicator light may be turned on. An indication of the gap angle of the rotary table 22 at the time when the mold closing process is completed may be a turned on light. For example, the acceptable maximum value of the gap angle may be set based on a gap angle at the time when galling greatly influencing the service lifetime of the mold is generated between the guide pins 32L or 32R and the engaging holes 14.

In addition, the rotation angle (gap angle) of the rotary table 22 at the time when the mold closing process is completed may be used for correcting a rotating operation (first designated rotation angle) with respect to the rotating shaft 34 of the rotary table 22 after this mold closing process (feed back control). For example, in order to form the pushing state shown in FIG. 2 in a next cycle, the main controller 40 may control so as to rotate the rotary table 22 at the first designated rotation angle corrected by the gap angle (the rotation angle of the rotary table 22 at the time when the mold closing process is completed) and then stop. As a result of this, the gap angle can be corrected in advance and a position shift correction amount by the mold positioning part, the guide pins 32L or 32R and the engaging holes 14, can be reduced.

In step S512, the movable mold 30 and the stationary mold 12 are clamped so that injection molding of resin is performed. After the injection molding is completed, the process goes to step S514.

In step S514, the main controller 40 performs a mold opening process. At this time, where the rotation angle of the rotary table 22 corresponding to the output value of the encoder 53 at the time when the mold closing process is completed (the value detected in the above-mentioned step S510) is maintained, the main controller performs the mold opening process. In other words, in a case where the gap angle is zero, the mold opening is performed where the rotary table 22 is rotated at the gap angle from the first designated rotation angle. As a result of this, friction which may be generated between the guide pins 32L or 32R and the engaging holes 14 at the time of mold opening can be prevented. After the mold opening is completed, the process goes to step S516.

In step S516, the main controller 40 controls the reversing servo motor 52 so that the rotary table 22 is reversed. In other words, in this example, the reversing servo motor 52 is controlled so that the rotary table 22 is reversed from the pushing state shown in FIG. 2 to the pushing state shown in FIG. 3. In other words, the rotary table 22 is reversed from the pushing state where the rotary table 22 is maintained at the first designated rotation angle to the pushing state where the rotary table 22 is maintained at the second designated rotation angle. After the reversing is completed, a process starts again from step S500. In this case, by detecting, in step S510, the rotation angle of the rotary table 22 at the time when the mold closing process is completed (namely, the rotation angle of the rotary table 22 after the movable mold 30 is touched to with the stationary mold 12), a change angle (gap angle) relative to the rotation angle (the second designated rotation angle) in the pushing state (see FIG. 3) is determined where the projecting part 24 of the rotary table 22 is pushed onto the stopper 21R.

Thus, injection molding of the resin is continually performed while the rotary table 22 is reversed.

In this example, the projecting part 24 of the rotary table 22, the stopper 21L or 21R of the movable platen 20, and the reversing servo motor 52 cooperate with each other and work as a table positioning part configured to rotate the rotary table 22 at the designated rotation angle (the first or second designated rotation angle) and position the rotary table 22.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority or inferiority of the invention. Although the embodiments of the present invention have been described in detail, it should be understood that the various changes, substitutions, and alterations could be made hereto without departing from the scope of the invention as defined by the appended claims.

For example, in this example, the rotation angle of the rotary table 22 (also the movable mold 30 provided at the rotary table 22) is mechanically restricted by generating a driving force (rotation torque) of the reversing servo motor 52 in a direction where the projecting part 24 of the rotary table 22 is pushed onto the stopper 21L or the stopper 21R. However, the present invention is not limited to the above-discussed restriction manner. For example, instead of the table positioning part formed by the projecting part 24 and the stopper 21L or 21R, a positioning hole may be provided at an external circumferential side surface of the rotary table 22 or a surface of the rotary table 22. By inserting a positioning pin into the positioning hole, the rotation angle of the rotary table 22 (also the movable mold 30 provided at the rotary table 22) may be mechanically restricted. In this case, the mold closing is started when the positioning pin is inserted into the positioning hole, and then the positioning pin is extracted from the positioning hole just before the guide pins 32L or 32R reach the engaging holes 14 of the stationary mold 12 so that the rotary table 22 is free to rotate.

For example, in this example, the positioning of the rotary table 22 is realized and maintained by generating a driving force (rotation torque) of the reversing servo motor 52 in a direction where the projecting part 24 of the rotary table 22 is pushed onto the stopper 21L or the stopper 21R. However, the present invention is not limited to this example. In other words, positioning the rotary table 22 and maintaining the position may be performed mechanically or electrically by a servo motor as long as the position of the rotary table 22 is maintained.

Furthermore, in this example, positioning of the rotary table 22 is broken just before the mold positioning part works (see step S506 of FIG. 5). However, as long as positioning of the rotary table 22 is broken before the mold positioning part works, "just before" is not required. For example, positioning of the rotary table 22 may be broken at the time when the mold closing starts or the like.

## Claims

1. A rotary type injection molding machine (1), comprising:
a first mold (30) provided rotatable by a rotating shaft (34) of a rotary table (22);
a second mold (12) configured to perform mold closing with the first mold (30);
a main controller (40) configured to
rotate the rotary table (22) at a designated rotation angle so as to be positioned;
position the first mold (30) and the second mold (12) in a case of the mold closing of the first mold (30) and the second mold (12); and
detect a rotation angle of the rotary table (22),
wherein the main controller (40) is configured to break positioning of the rotary table (22) before the mold positioning part works, and is configured to detect the rotation angle of the rotary table (22) after positioning by the mold positioning part is completed.

2. The rotary type injection molding machine as claimed in claim 1, the main controller (40) further being configured to compare the detected rotation angle of the rotary table (22) and the designated rotation angle.

3. The rotary type injection molding machine as claimed in claim 1, the main controller (40) further being configured to correct the designated rotation angle based on the detected rotation angle of the rotary table (22).

4. An injection molding method, comprising the steps of:
rotating a rotary table (22), where a first mold (30) is provided rotatable by a rotating shaft (34), at a designated angle so as to position the rotary table (22);
breaking positioning of the rotary table (22) so that the first mold (30) and a second mold (12) are positioned; and
detecting a rotation angle of the rotary table (22) after positioning of the first mold (30) and the second mold (12) is completed.

## Patentansprüche

1. Spritzgussmaschine (1) der Drehbauart, die Folgendes aufweist:
eine erste Form (30), die in drehbarer Weise durch eine drehende Welle (34) eines Drehtisches (22) vorgesehen wird;
eine zweite Form (12), die konfiguriert ist, um ein Formschließen mit der ersten Form (30) auszuführen;
eine Hauptsteuervorrichtung (40), die konfiguriert ist zum Drehen des Drehtisches (22) mit einem vorgesehenen Drehwinkel, um diesen zu positionieren;
Positionieren der ersten Form (30) und der zweiten Form (12) in einem Fall des Formschließens der ersten Form (30) und der zweiten Form (12); und
Detektieren eines Drehwinkels des Drehtisches (22),
wobei die Hauptsteuervorrichtung (40) konfiguriert ist, um die Positionierung des Drehtischs (22) zu unterbrechen, bevor der Formpositionierungsteil arbeitet, und konfiguriert ist, um den Drehwinkel des Drehtischs (22) zu detektieren, nachdem die Positionierung des Formpositionierungsteils abgeschlossen ist.

2. Spritzgussmaschine der Drehbauart gemäß Anspruch 1, wobei die Hauptsteuervorrichtung (40) ferner konfiguriert ist, um den detektierten Drehwinkel des Drehtisches (22) und den vorgesehenen Drehwinkel zu vergleichen.

3. Spritzgussmaschine der Drehbauart gemäß Anspruch 1, wobei die Hauptsteuervorrichtung (40) ferner konfiguriert ist, um den vorgesehenen Drehwinkel basierend auf dem detektierten Drehwinkel des Drehtisches (22) zu korrigieren.

4. Spritzgussverfahren, dass die folgenden Schritte aufweist:
Drehen eines Rotationstisches (22), bei dem eine erste Form (30) drehbar durch eine drehende Welle (34) vorgesehen ist, und zwar mit einem vorgesehenen Winkel, um den Drehtisch (22) zu positionieren;
Unterbrechen der Positionierung des Drehtisches (22), so dass die erste Form (30) und die zweite Form (12) positioniert sind; und
Detektieren eines Drehwinkels des Drehtisches (22) nachdem die Positionierung der ersten Form (30) und der zweiten Form (12) abgeschlossen ist.

## Revendications

1. Machine (1) de moulage par injection du type rotatif, comprenant :
un premier moule (30) prévu pour pouvoir tourner grâce à un arbre rotatif (34) d'une table rotative (22) ;
un deuxième moule (12) configuré pour effectuer une fermeture de moule avec le premier moule (30) ;
un élément de commande principal (40) configuré pour
faire tourner la table rotative jusqu'à un angle de rotation déterminé de façon à être positionné ;
positionner le premier moule (30) et le deuxième moule (12) dans une configuration de fermeture de moule du premier moule (30) et du deuxième moule (12) ; et pour
détecter un angle de rotation de la table rotative (22),
dans laquelle l'élément de commande principal (40) est configuré pour arrêter le positionnement de la table rotative (22) avant que la partie de positionnement de moule soit activée, et est configuré pour détecter l'angle de rotation de la table rotative (22) après que le positionnement par la partie de positionnement de moule soit terminé.

2. Machine de moulage par injection du type rotatif selon la revendication 1, dans laquelle l'élément de commande principal (40) est en outre configuré pour comparer l'angle de rotation de la table rotative (22) détecté à l'angle de rotation déterminé.

3. Machine de moulage par injection du type rotatif selon la revendication 1, dans laquelle l'élément de commande principal (40) est en outre configuré pour corriger l'angle de rotation déterminé sur la base de l'angle de rotation de la table rotative (22) détecté.

4. Procédé de moulage par injection, comprenant les étapes consistant à :
faire tourner une table rotative (22), un premier moule (30) étant prévu pour pouvoir tourner grâce à un arbre rotatif (34), jusqu'à un angle déterminé pour positionner la table rotative (22) ;
arrêter le positionnement de la table rotative (22) de façon que le premier moule (30) et un deuxième moule (12) sont en position ; et
détecter un angle de rotation de la table rotative (22) après le positionnement du premier moule (30) et du deuxième moule (12) .
